# EUROPEAN PATENT SPECIFICATION

(11) **EP 0 460 792 B1**
(45) Date of publication and mention of the grant of the patent: **11.01.1995**
(21) Application number: 91302755.3
(22) Date of filing: 28.03.1991
(51) Int. Cl.: B60J 10/00, B60R 13/06, B21D 28/26

(54) **Metal reinforcements for sealing strips and the like and methods of making them**
Metallische Armierung für Dichtungsband oder dergleichen und Verfahren zu seiner Herstellung
Renfort métallique pour joint en bande ou similaire et méthode pour sa réalisation

(30) Priority: 08.06.1990 GB 9012853
(43) Date of publication of application: 11.12.1991
(73) Proprietor: DRAFTEX INDUSTRIES LIMITED, Edinburgh, EH3 6YY, Scotland (GB)
(72) Inventor: Bright, Robert Granville, W-4060 Viersen 1 (DE)
(74) Representative: Foster, David Martyn

(56) References cited:
- EP-A- 0 294 345
- EP-A- 0 301 942
- EP-A- 0 393 943
- DE-U- 8 715 374
- FR-A- 2 136 096
- FR-A- 2 389 052
- FR-A- 2 635 366
- US-A- 4 584 150

## Description

The invention relates to a method of making a reinforcing metal carrier for use in a sealing, trimming or glass-guiding strip or the like, in which a plurality of metal cutting processes are performed along a predetermined continuous length of a metal blank.

The invention also relates to an apparatus for producing a channel-shaped metal reinforcing carrier for a sealing, trimming, or glass-guiding strip or the like, comprising means defining a working path, and cutter means disposed adjacent the working path and for performing cutting operations on a longitudinal metal blank when the latter is situated in the working path and the metal blank and the cutter means move relative to each other along the direction of the working path.

The invention further relates to a channel-shaped metal carrier integrally extending between two predetermined end points and having a plurality of slots distributed along its length, the slots being arranged in respective groups in at least some of which the slots differ in shape or arrangement from those in other said groups, each group extending over a respective longitudinal region of the carrier between the end points.

Such methods, apparatus and carriers are known in the art, as shown, for example, in FR-A-2 389 052.

In this prior art, however, the metal cutting processes or operations are carried out continuously and substantially identically along the length of the blank. In some circumstances, however, it is desirable to produce a metal carrier having characteristics which vary along its length. The invention aims to overcome this problem.

It is known from FR-A-2 635 366 to feed a channel-shaped sealing strip incorporating a constantly-arranged series of slots through a machine which varies the width of the channel along the length of the strip according to a predetermined program. However, this simply enables the strip to fit mounting supports of varying thickness and does not enable the carrier or the strip to have other varying characteristics along its length. The invention aims to overcome this problem as well.

Accordingly, the method as first set forth above is characterised in that the metal cutting processes performed at predetermined longitudinally spaced parts of the metal blank differ from each other in a predetermined manner so as to produce correspondingly varying characteristics in the carrier, each predetermined part of the blank remaining integrally connected to the next part or parts thereof.

According to the invention, also, the known apparatus as first set forth above is characterised in that the cutter means comprises a plurality of cutter arrangements positioned along the working path and each for performing a different cutting operation on the blank, the apparatus being further characterised by control means responsive to the relative movement and to the position at any time of the blank relative to each of the cutter arrangements for so operating the cutter arrangements that they perform their respective cutting operations on the blank at respective predetermined positions therealong, and by means situated along the working path for receiving the blank after performance of the cutting operations on it and forming it into channel-shape.

According to the invention, further, the known carrier as first set forth above is characterised in that the slots in at least two said groups extend over respectively different proportions of the width of the channel.

Further developments in line with the method, the apparatus and the channel-shaped metal carrier according to the invention defined in claims 1, 17 and 26 are referred to in the dependent claims 2 to 16, 18 to 25 and 27 to 32 respectively.

Methods according to the invention of making metal carriers, apparatus embodying the invention for making metal carriers, metal carriers embodying the invention and made by the methods and apparatus, and sealing and similar strips incorporating such carriers, will all now be described, by way of example only, with reference to the accompanying diagrammatic drawings in which:
Figures 1,2 and 3 are perspective views of known forms of metal carrier;
Figure 4 is a cross-section of a sealing strip incorporating one of the metal carriers of Figures 1,2 and 3;
Figure 5 illustrates a known method for the formation of a mitred corner between two lengths of sealing strip each of the general type shown in Figure 4;
Figure 6 is a plan view of a length of metal blank showing the carrying out of various steps in the methods according to the invention;
Figure 7 is a diagrammatic side view of apparatus embodying the invention;
Figure 8 is a perspective view of a metal carrier formed in accordance with the invention from the blank of Fig. 6;
Figure 9 is a side view of one end of a sealing strip produced by the methods and apparatus of the invention; and
Figures 10 and 11 show the formation of a mitred corner in a length of sealing strip in accordance with the invention.

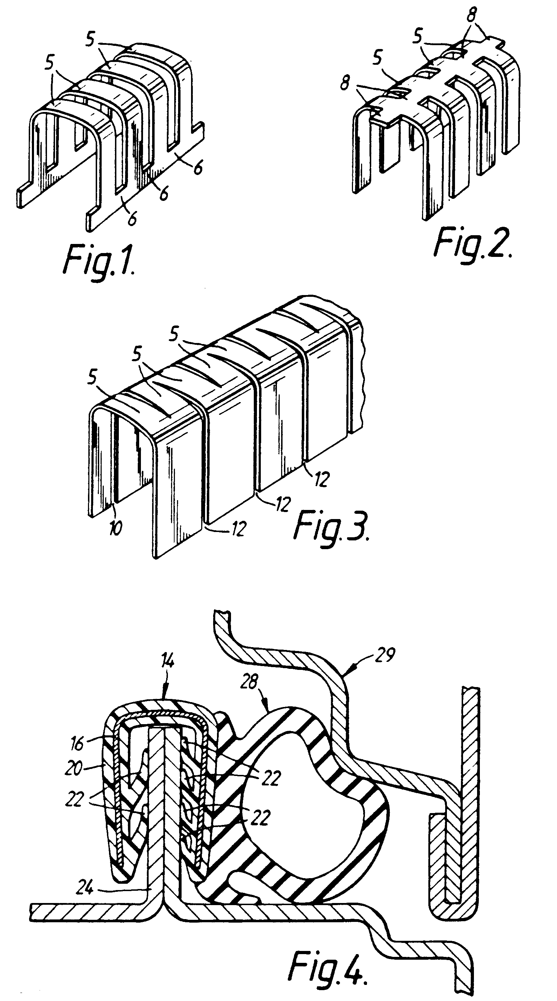

Referring to the drawings, Figures 1,2 and 3 show known forms of channel-shaped carrier. As shown in Figure 1, the metal carrier is in the form of U-shaped elements 5 whose distal ends are joined together by connecting links 6.

In the carrier shown in Figure 2, the U-shaped links 5 are joined together by connecting links 8 at the base of the U's.

In the carrier shown in Figure 3, the slots 10,12 each extend from one distal edge of the channel, up the corresponding side wall, and partway, only, across the base of the channel.

Figure 4 shows an end view of a strip 14 incorporating a metal carrier (shown generally at 16) which may be of any of the types shown in Figures 1 to 3, for example. As shown, the strip comprises channel-shaped extruded plastics or rubber material 20 in which is completely embedded the carrier 16. Such a strip may be manufactured using a cross-head extruder. The strip incorporates gripping lips 22 which are integrally extruded with the plastics or rubber material 20. In use, the strip is placed over and embracingly grips a flange 24 such as running around a vehicle door opening. The lips 22 help to secure the strip in position on the flange and provide improved sealing. The extrusion process may be such as to extrude the lips of a different hardness (for example, softer) than the channel-shaped extruded material. As shown, the strip may also include a soft tubular sealing section 28 such as made of foamed rubber for example. This sealing section may be extruded separately and adhesively secured to the channel-shaped extruded material or may be extruded integrally therewith. In use, the channel-shaped part supports the tubular sealing section so as to run around the outside of the door opening so that the door 29 closes on to it, partially compressing it to form a seal.

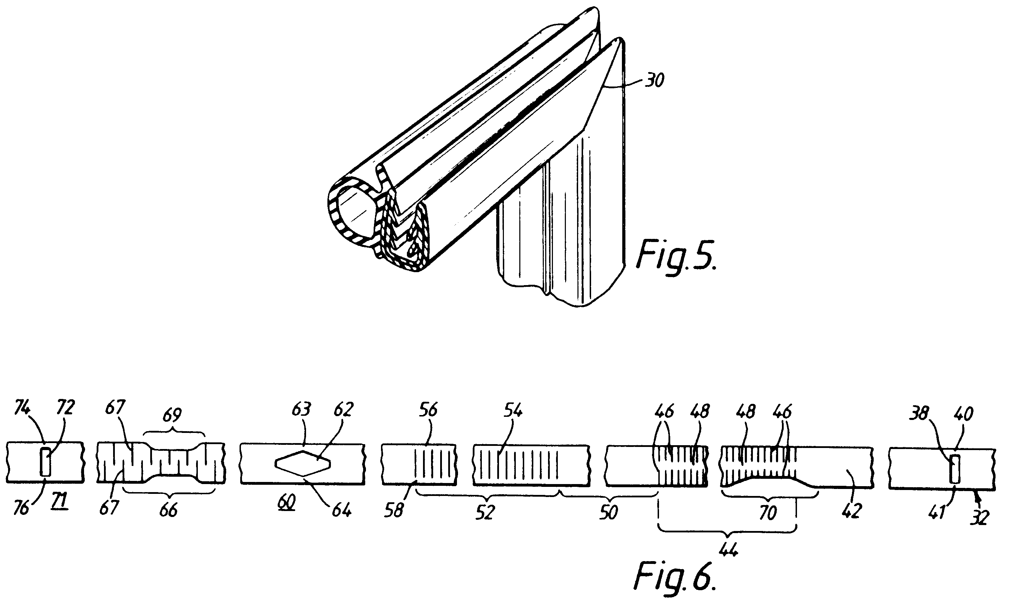

Sealing strips of the general form shown in Figure 4 may be supplied to the car manufacture in indefinite lengths and then placed on the flange around a particular vehicle door opening and cut off to length. Instead, however, they may be supplied in pre-formed closed loops, sized to fit a particular door opening. In certain cases, the door openings may have sharp corners, substantially right-angled corners for example. In such a case, it is necessary to pre-form a matching corner in the length of sealing strip. Figure 5 shows a conventional way of doing this, in which mitre cuts are formed at the ends of two lengths of sealing strip. These are then brought together and secured as by welding or glueing the plastics or rubber material together at 30. However, this process conventionally requires that the mitre cut be formed not only through the extruded plastics or rubber material but also through the metal carrier. Depending on the particular form of carrier used, the action of cutting through it will or may leave separated metal pieces within the rubber or plastics at the mitre-cut ends and these pieces of metal must be removed before a successful joint can be made. This process is time-consuming and difficult to automate.

Different forms of metal carrier, such as the three forms shown in Figures 1,2 and 3 for example, have differing advantages. Some are more flexible than others. Some, such as the type of carrier shown in Figure 3, for example, provides better resistance to "puckering" of the plastics or rubber material when the strip is bent around a particular type of radius. In certain cases, a very flexible carrier is advantageous. In other applications, a more rigid carrier is required, such as for bridging over defects in a flange or for providing a particularly smooth external finish. Various different requirements may arise around a single door opening. In other words, for certain applications it would be advantageous to provide sealing strips in closed-loop form in which the carrier varied in construction around the loop with its construction in any region of the loop being best suited to the requirements (e.g. curvature of the flange, shape of the flange or adjacent body work, thickness of the flange, presence of spot welds or similar).

Where a length of strip has to be cut off with a straight cut (for example, where the two ends of a closed loop are to be secured together), there may also be a problem. The cutting action may result in there being separated pieces of metal partially held in place by the extruded material at the cut off end of the strip, and such pieces of metal must also be removed.

Figure 6 illustrates, diagrammatically, steps involved in a method according to the invention for producing a metal carrier. Here, a flat metal blank 32 is moved longitudinally from left to right through a programmed metal processing machine (not shown in this Figure). As the blank moves through the machine, programmed metal cutting operations take place at particular positions along the blank according to a predetermined program. The effects of some of these cutting operations are illustrated in Figure 6.

Thus, at position 38 a rectangular aperture is cut through the blank so as to leave the distal edges of the blank connected as shown at 40 and 41. In a manner to be explained in more detail, this rectangular aperture defines one end of a particular, eventually separate, length of carrier, this length of carrier lying to the left of the aperture 40 with another length of carrier lying to the right of it.

Over a region 42, the metal blank is left unaffected by the metal processing action.

Over a region 44, slots 46, running along opposite edges of the blank and leaving an unslotted central portion 48, are formed by the metal cutting machine. For ease of illustration, the slots are shown diagrammatically in the Figure merely by thin vertical lines but in practice would be actual slots (i.e. forming individual gaps in the metal).

There is then a region 50 where the blank is left unaffected and thereafter a region 52 where slots 54 are formed, these slots leaving unslotted marginal regions 56 and 58.

At a region 60, a diamond-shaped aperture 62 is formed, for a purpose to be described. This aperture 62 is spaced inwardly of marginal, unslotted, portions 63,64 of the blank.

Over a region 66, the blank is formed with slots 67 which are interdigitated with each other, the slots 67 each extending partway across the width of the blank.

As shown over a region 69, the metal blank is reduced in width, symmetrically from both sides. At a region 70, it is reduced in width from one side only.

Finally, at the region 71, a rectangular aperture 72 is formed, similar to the aperture 38, leaving marginal portions 74,76 uncut.

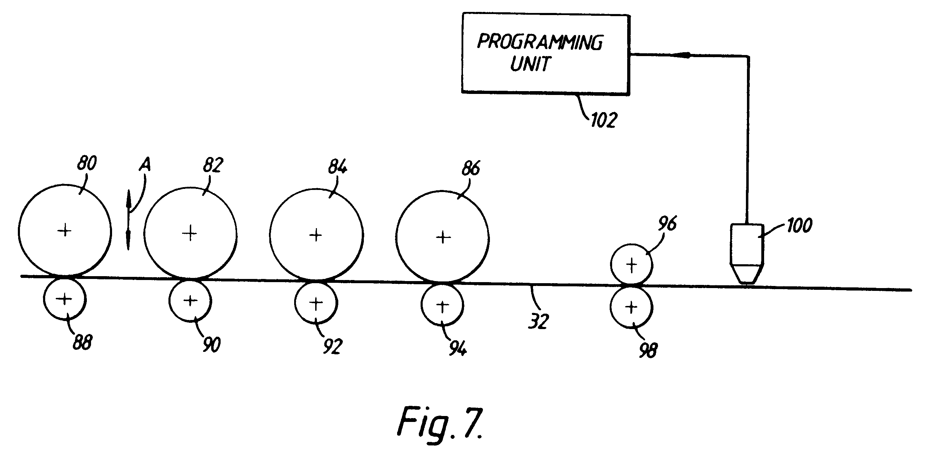

The machine for producing the various apertures and slots shown in Figure 6 can take various forms. One form is shown purely diagrammatically in side view in Figure 7. It comprises a series of rotary cutters 80,82,84,86, each rotatable about a generally horizontal axis and with its periphery adjacent to a respective roller 88,90,92,94. The path for the metal blank 32 passes between the bights of the respective cutter/roller combinations. Each of the cutters 80,82,84 and 86 can be raised and lowered in the directions of the arrows A so as to raise it clear of the metal blank 32.

A pair of drive rollers 96,98 continuously draw the metal blank 32 through the machine at a constant known speed. A sensor shown diagrammatically at 100 accurately monitors the speed of the strip and provides a corresponding electrical signal to a programming unit 102. Operating in accordance with a predetermined program, according to the particularly required arrangement of slots and apertures, such as those shown in the blank 32 in Figure 6, the programming unit 102 so raises and lowers the cutters 80,82,84,86 and rotates them relative to the metal blank when they are raised therefrom, that each cutter produces a required formation (a particular arrangement of slots or a particularly shaped aperture for example) at the correct linear position along the blank.

After the blank has been processed in this way, it may be temporarily stored on a reel, for example, for future use. Instead, it can be transported directly and continuously to a cross-head extruder which embeds it in plastics or rubber material. Thereafter, the covered blank is then passed through suitably arranged pairs of rollers for forming it into channel-shape. Instead, however, it may be formed into channel-shape before being passed into the extruder.

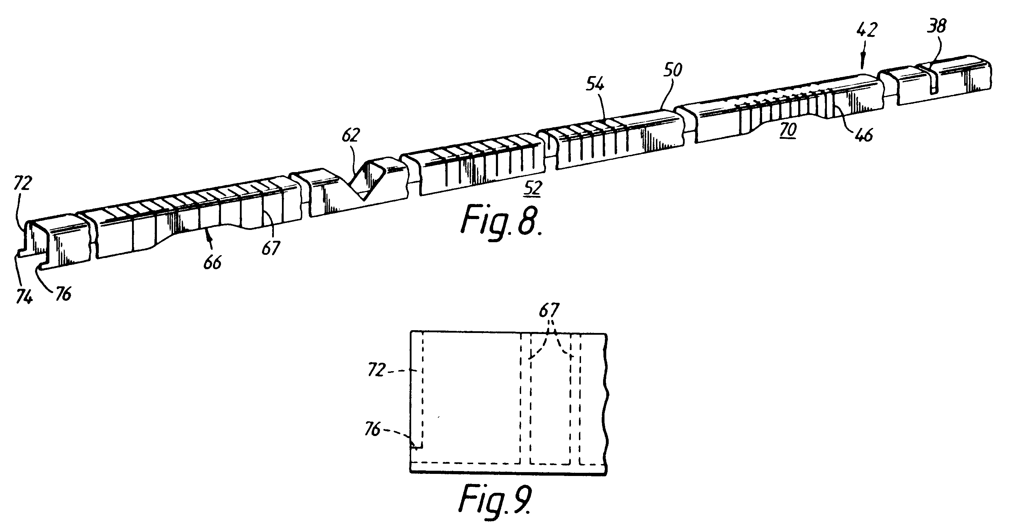

Figure 8 shows the processed blank of Figure 6 bent into channel-form. As shown, it forms a continuous metal carrier. Over region 42, the carrier is in the form of an unapertured channel and is highly rigid over this region. Over region 44, the carrier takes the form of that shown in Figure 2. Over region 52, the carrier takes the form of that shown in Figure 1. Finally, over region 64, the carrier takes the form shown in Figure 3. In this way, therefore, a metal carrier can be produced whose form varies along its length in a predetermined way. Clearly, the forms of carrier illustrated in Figure 8 are merely a small number of the many different forms of carrier which can be produced in this way. It is in practice unlikely that the short length of carrier would be in the four different forms illustrated in Figure 8, but it is more than possible that two or three different forms could be used for a sealing strip extending in a closed loop around a particular door opening. The regions 69 and 70 (see Fig. 6) in the metal blank 32, where its width is reduced, enable the production of sealing strips with cross-sections to suit particular applications, such as, for example, for use where, over a region around the length of a flange surrounding a door opening, the flange is locally less deep or the sealing strip has to be shaped so as to pass a local obstruction.

As already explained, the metal is incorporated into the channel-shaped sealing strip using an extrusion process so as to cover it completely with extruded plastics or rubber material. This process may take place before or after the flat metal blank 32 (in the form shown in Figure 6) is bent into channel-shape. Advantageously, the extrusion process covers the metal edges around the apertures 38,62 and 72 with extruded material.

Prior to the extrusion step, it may be advantageous to apply inserts, such as made of plastics material, into the apertures 38,62 and 72, so as to be secured therein, in order to ensure that the overall thickness of the extrudate along the length of the carrier is substantially constant.

The description above with reference to Fig. 6 states that actual slots (46,48,54,67,68) are formed through the metal blank as shown; that is metal is actually cut out and discarded. Instead of forming such slots, however, corresponding narrow slits can be formed, that is, cuts extending through the material of the blank but not involving discard of any material. Thereafter, the metal blank is passed between the bight of one or more pairs of rollers which compress it and subject it to a stretching operation which elongates the blank and converts the slits into slots. Because this process involves no discard of material, it is more economical. It will be understood that such slits may be formed in exactly the same way, that is, by using programmed rotary cutters as shown in Figure 7, as for the slots. In this case, however, the programming has to take into account the fact that the blank will be stretched after the slitting process. In certain cases, or positions along the carrier, however, such slits would not be converted into slots. That is, the finished carrier would be in the original slitted form.

As stated above, the apertures 38 and 72 define the ends of a particular length of carrier. After the formed continuous carrier has been subjected to the extrusion process, it may be readily cut to length by means of a cutting blade which passes through the apertures 38 and 72, severing the extruded plastics or rubber material which will now cover these apertures and severing the thin metal marginal connecting pieces 40,41 and 74,76. Such a severing operation may be carried out automatically as the strip moves longitudinally, the operation being under control of suitable electronic apparatus which senses the position of each aperture 38,72.

Each such severed end produced in this way will have the general appearance shown in end view in Figure 9. The left hand end of the carrier shown in Figure 8 illustrates the form which the carrier takes after such a severing operation.

Thus, the end region of the strip will be locally clear of any metal except for the severed marginal regions 40,41 and 74,76. No action will be necessary to remove any separated pieces of metal. Two strip ends, each corresponding to that shown in Figure 9, can be easily butted and secured together such as by hot melt welding or adhesive. The marginal metal ends 40,41 and 74,76 are sufficiently small and thin to be left in position; as the two mating ends of the length of sealing strip are brought together, the meeting metal ends on each side of the strip will overlap with each other.

It may be necessary or advisable, particularly where the carrier is completely unapertured or merely slit (not slotted), to cover the carrier with a suitable bonding agent before the extrusion step to facilitate bending of the extrudate to the metal.

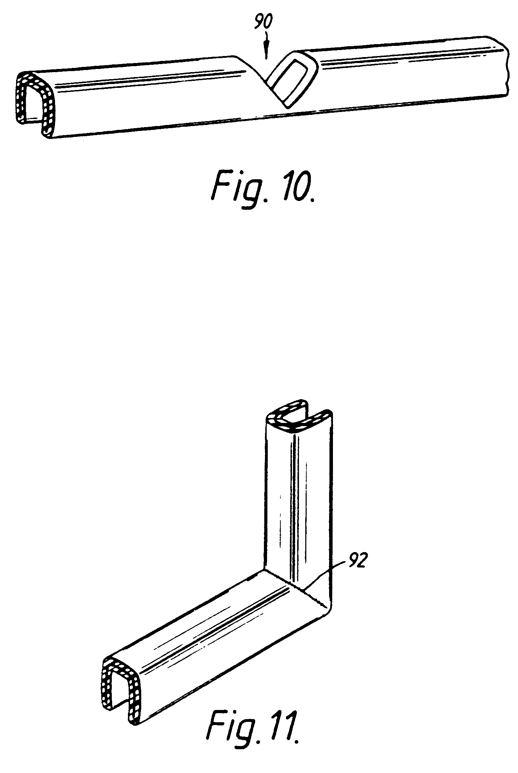

The purpose of the diamond-shaped aperture 62 is to enable a sharp corner to be formed in the length of sealing strip. The process is illustrated in Figures 10 and 11. It is merely necessary to remove the extruded plastics or rubber material where it will have covered the aperture 62, so as to leave an open generally V-shaped notch 90 (see Figure 10), and then to bend the sealing strip into the required right angle shape as shown in Figure 11. The plastics or rubber material around the edges of the diamond-shaped aperture come together and can be secured together by welding or adhesive as shown at 92. Throughout this process, the continuous marginal metal connections 63,64 (see Fig. 6) remain integral and need not be cut through.

The step of removing the extrudate from the aperture is advantageously carried out before the flat blank is formed into channel shape.

Because the strip is in continuous form throughout this corner-forming process, the process itself can be substantially completed automated in a simple way. This contrasts with the formation of corners between separate lengths of sealing strip. This involves forming mitre cuts in the ends of the sealing strip to be joined, the removal of any separated metal pieces, the bringing together of the two mitre-cut ends, and there joining as by welding or adhesive. This process is very difficult to automate satisfactorily.

Although the above description has described the formation of a continuous carrier having different patterns of slots successively arranged along an integral strip, it is also possible to form a carrier of the type shown in Figure 8 by welding end to end separate lengths of corner, each such length being separately machined to have a particular pattern of slots therein. Such a welded length of carrier can be formed with apertures corresponding to apertures 38,62 and 72 for the purposes described and/or the waisted portions 69 and 70.

Although the diamond-shaped aperture 62 has been shown as formed in an unslotted (and unslitted) part of the carrier, in practice it may well be formed in a slotted or slitted part.

Although the metal carriers illustrated have been shown to be of channel-form, this is not necessary. The methods described can be used to produce carriers of any suitable form, such as of square or rectangular cross-section.

## Claims

1. A method of making a reinforcing metal carrier (16) for use in a sealing, trimming or glass-guiding strip or the like, in which a plurality of metal cutting processes are performed along a predetermined continuous length of a metal blank (32), characterised in that the metal cutting processes performed at predetermined longitudinally spaced parts of the metal blank (32) differ from each other in a predetermined manner so as to produce correspondingly varying characteristics in the carrier (16), each predetermined part of the blank remaining integrally connected to the next part or parts thereof.

2. A method according to claim 1, characterised in that one metal cutting process comprises the step of cutting a predetermined formation of slots through the blank (32).

3. A method according to claim 1, characterised in that one metal cutting process comprises the step of cutting a predetermined formation of slits through the blank (32) and the step of thereafter thinning the metal of the blank (32) so as to stretch it and expand the slits into slots.

4. A method according to any preceding claim, characterised in that one of the metal cutting processes comprises the step of cutting a substantially rectangular aperture (38,72) through the metal blank (32) at each of two positions defining the ends of the metal carrier (16), each aperture (38,72) leaving two integral marginal portions (40,41,74,76) uncut and running along each edge of the blank (32).

5. A method according to any preceding claim, characterised by the step of embedding the metal carrier (16) in extruded plastics or rubber material (20).

6. A method according to claim 5, characterised by the step of forming the metal carrier (16) into channel-form before or after the extrusion step.

7. A method according to claim 6, characterised in that one of the metal cutting processes comprises the step of cutting a substantially diamond-shaped aperture (62) through the metal blank (32) with two of its apices lying substantially on the longitudinal axis of the blank (32) and the other two substantially on an axis normal thereto but respectively spaced inwardly from the edges of the blank so as to leave thin uncut marginal edge regions (63,64), and by carrying out the following steps after the extrusion step and the step of forming the carrier (16) into channel-shape: removing extruded material covering at least part of the said aperture (62), bending the carrier substantially about the said normal axis so as to bring the extruded plastics or rubber material (20) around the periphery of the aperture (62) into contact with itself and thereby form a sharp corner in the channel, and securing the extruded material (20) together where it is in contact.

8. A method according to claim 6, characterised by the step of forming a notch (62, Fig. 8), generally "V"-shaped in cross-section, through the channel at a point where a sharp corner is required and with the open mouth of the "V" lying in the base of the channel and the point of the "V" lying close to but spaced from the longitudinal edges of the two side walls of the channel so that the two longitudinal parts of the strip between which lies the notch (62) remain connected together by marginal edge portions of the two side walls and so that the line running along the narrowest part of the notch is transverse to the length of the strip, bending the strip about the said line so as to close the opposed edges of the notch (62) together, and securing the opposed edges of the notch (62) together.

9. A method according to claim 8, characterised in that the step of securing the closed edges of the notch (62, Fig. 8) together comprises the step of welding or adhering together the plastics or rubber material (20) at the closed-together edges.

10. A method according to claim 4, characterised by the steps of bending the blank (32) into channel-form and covering it with extruded material after formation of the rectangular apertures (38,72).

11. A method according to claim 10, characterised by the step of cutting the strip by means of a cutter passing through one said aperture (38,72).

12. A method according to claim 11, characterised by the step of automatically sensing for the position of each said aperture (38,72) and controlling the cutting step accordingly.

13. A method according to any preceding claim, characterised in that no said metal cutting processes are performed between at least two of the said longitudinally spaced parts of the blank (32).

14. A method according to any preceding claim, characterised in that one of the metal cutting processes comprises the step of reducing the width of the blank (32) at at least one of the said predetermined longitudinally spaced parts thereof.

15. A method according to claim 14, characterised in that this width-reducing step reduces the width of the blank (32) from one longitudinal edge only.

16. A method according to claim 14, characterised in that the width-reducing step reduces the width of the blank (32) from both longitudinal edges.

17. Apparatus for producing a channel-shaped metal reinforcing carrier (16) for a sealing, trimming, or glass-guiding strip or the like, comprising means defining a working path (Fig. 7), and cutter means (80,82,84,86) disposed adjacent the working path and for performing cutting operations on a longitudinal metal blank (32) when the latter is situated in the working path and the metal blank (32) and the cutter means move relative to each other along the direction of the working path, characterised in that the cutter means comprises a plurality of cutter arrangements (80,82,84,86) positioned along the working path and each for performing a different cutting operation on the blank (32), the apparatus being further characterised by control means (100,102) responsive to the relative movement and to the position at any time of the blank (32) relative to each of the cutter arrangements (80,82,84,86) for so operating the cutter arrangements (80,82,84,86) that they perform their respective cutting operations on the blank (32) at respective predetermined positions therealong, and by means situated along the working path for receiving the blank after performance of the cutting operations on it and forming it into channel-shape.

18. Apparatus according to claim 17, characterised by plastics or rubber extrusion means situated along the working path for covering the blank (32) with extruded plastics or rubber material (20) after performance of the cutting operations thereon.

19. Apparatus according to claim 18, characterised in that one of the said cutter arrangements (80,82,84,86) comprises means for cutting a substantially rectangularly-shaped aperture (38,72) through the blank at at least one of two positions therealong defining the respective ends of a predetermined length, the or each of the apertures (38,72) extending across the width of the blank and terminating short of the edges thereof so as to leave narrow metal marginal portions (40,41;74,76) of the blank (32) uncut, and by a further cutter arrangement positioned to receive the carrier (16) after it has been covered with the extruded plastics or rubber material (20) and operative to cut through the extruded material (20) at the or each of the said apertures (38,72) and through the narrow marginal portions there (40,41;74,76).

20. Apparatus according to claim 18 or 19, characterised in that one of the cutter arrangements (80,82,84,86) comprises means for cutting a substantially diamond-shaped aperture (62) at a predetermined position along the length of the metal blank (32), the diamond-shaped aperture (62) being symmetrically positioned with respect to the longitudinal and transverse axes of the blank (32), the aperture (62) being so positioned as to leave uncut narrow metal marginal edge portions (63,64) of the blank (32) on opposite sides of the aperture (62) whereby, after the blank (32) has been formed into channel-shape, the said aperture (62) forms a notch (62, Fig. 8) through the channel of generally "V"-shape in cross-section with the open mouth of the "V" lying in the base of the channel and the point thereof lying close to but spaced from the longitudinally extending edges of the side walls thereof by the said narrow marginal edge portions (63,64), the apparatus being further characterised by means for receiving the carrier (16) after it has been covered with the extruded plastics or rubber material (20) and operative to remove at least some of the extruded material (20) covering the diamond-shaped aperture (62) and to bend the covered carrier (16) at the diamond-shaped aperture (62) about the transverse axis lying in the narrowest part of the notch so as to bring the opposed edges of the diamond-shaped aperture (62) together and to bend the metal marginal edge portions (63,64) and by means for securing together the extruded material (20) at the opposed edges of the diamond-shaped aperture (62), thereby forming a corner in the covered carrier (16).

21. Apparatus according to claim 18, characterised in that one of the said cutter arrangements comprises a cutter arrangement operative to form a notch (62, Fig. 8) through the channel of the strip and which is generally "V" -shaped in cross-section with the open mouth of the "V" lying in the base of the channel and the point thereof lying close to but spaced from the longitudinally extending edges of the side walls thereof so that the two longitudinal parts of the strip on each side of the notch (62) remain connected by narrow marginal edge portions (63,64) of the two side walls, the apparatus being further characterised by bending means for bending the strip about the transverse axis lying in the narrowest part of the notch so as to bring the extruded material (20) around the edges of the notch together, and securing means for securing together the extruded material (20) at the edges of the notch.

22. Apparatus according to any one of claims 17 to 21, characterised in that the control means (100,102) includes means for so operating the cutter arrangements (80,82,84,86) that no cutting operation is performed on a portion of the blank (32) between portions therealong where respective said cutting operations are performed.

23. Apparatus according to any one of claims 17 to 22, characterised in that each said cutter arrangement (80,82,84,86) comprises a rotary cutter.

24. Apparatus according to claim 23, characterised in that the control moans (100,102) comprises means for moving each rotary cutter towards and away from the working path so as respectively to cause that rotary cutter to carry out, and to stop that rotary cutter from carrying out a respective cutting operation.

25. Apparatus according to any one of claims 17 to 24, characterised in that the cutter arrangements (80,82,84,86) include means for reducing the width of the blank (32) at at least one said predetermined position therealong.

26. A channel-shaped metal carrier integrally extending between two predetermined end points (38,72) and having a plurality of slots distributed along its length, the slots being arranged in respective groups in at least some of which the slots differ in shape or arrangement front those in other said groups, each group extending over a respective longitudinal region of the carrier between the end points (38,72), characterised in that the slots in at least two said groups extend over respectively different proportions of the width of the channel.

27. A carrier according to claim 26, characterised in that the slots in one (e.g. 70) of the two said groups each extend in one side wall of the channel and over part, only, of the base of the channel.

28. A carrier according to claim 26, characterised in that the slots in at least one (52) of the said two groups each continuously extend from a point in one of the side walls of the channel and across the base of the channel into the other side wall of the channel.

29. A carrier according to any one of claims 26 to 28, characterised by having, over a portion (66,70) of its length only, a channel side wall of lesser depth than the depth of the adjacent portion of the same side wall.

30. A carrier according to claim 29, characterised in that there is a respective portion of channel side wall of the lesser depth on each side of the channel.

31. A carrier according to any one of claims 26 to 30, characterised in that it is apertured at each of the end points by respective apertures (38,72) which leave the two longitudinal parts of the carrier on each side of each end point connected only by marginal edge portions (40,41;74,76) of the two sidewalls of the channel.

32. A carrier according to any one of claims 26 to 31, characterised by a notch (62) through the channel at a predetermined position between the two end points, the notch (62) being generally "V-shaped in cross-section (Fig. 8) with the open mouth of the "V" lying in the base of the channel and the point thereof lying close to but spaced from the edges of the sidewalls thereof so that the two longitudinal parts of the carrier on each side of the notch (62) remain connected by marginal edge portions (62,64) of the two side walls.

## Patentansprüche

1. Verfahren zur Herstellung eines Armierungs-Metall-Trägers (16) zur Verwendung in Dichtungs-, Trimm- oder Glasführungsbändern oder dergleichen, bei welchem eine Vielzahl von Metallschneidverfahren entlang einer vorgegebenen kontinuierlichen Länge eines Metallstreifens (32) ausgeführt werden, dadurch gekennzeichnet, daß die in vorgegebenen Abschnitten in Längsrichtung des Metallstreifens (32) ausgeführten Metallschneidverfahren sich voneinander in einer vorgegebenen Weise unterscheiden, so daß sie entsprechend variierende Charakteristiken im Metallträger (16) erzeugen, wobei jeder vorgegebene Bereich des Metallstreifens vollständig mit dem nächsten Bereich oder Teilen davon verbunden bleibt.

2. Verfahren nach Anspruch 1, dadurch gekennzeichnet, daß ein Metallschneidverfahren eine vorgegebene Formation Nuten in den Metallstreifen (32) schneidet.

3. Verfahren nach Anspruch 1, dadurch gekennzeichnet, daß ein Metallschneidverfahren eine vorgegebene Formation Nuten in den Metallstreifen (32) schneidet und danach die Dicke des Metallstreifens (32) verringert, in dem der Metallstreifen (32) gestreckt wird und die Schlitze zu Nuten aufgeweitet werden.

4. Verfahren nach einem der vorhergehenden Ansprüche, dadurch gekennzeichnet, daß eines der Metallschneidverfahren im wesentlichen rechtwinklige Öffnungen (38, 72) in den Metallstreifen (32) an jeder der beiden die Enden des Metallträgers (16) definierenden Positionen schneidet und daß jede Öffnung (38, 72) zwei vollständig ungeschnittene Randbereiche (40, 41, 74, 76) hat und sich längs der Kanten des Metallstreifens (32) erstreckt.

5. Verfahren nach einem der vorhergehenden Ansprüche, gekennzeichnet durch die Einbettung des Metallstreifens (16) in ein extrudiertes Plastik- oder Gummimaterial (20).

6. Verfahren nach Anspruch 5, gekennzeichnet durch die Formierung des Metallstreifens (16) zu einer Rinne vor oder nach der Extrusion.

7. Verfahren nach Anspruch 6, dadurch gekennzeichnet, daß eines der Metallschneidverfahren im wesentlichen rhombusförmige Öffnungen (62) in den Metallstreifen (32) schneidet, wobei zwei der Spitzen im Wesentlichen in Richtung der longitudinalen Achse des Metallstreifens (32) und die anderen beiden im Wesentlichen senkrecht dazu ausgerichtet und dabei jeweils so innerhalb der Kanten des Metallstreifens angeordnet sind, daß dünne ungeschnittene Randbereiche (63, 64) verbleiben, und daß nach der Extrusion und der Formung des Metallträgers (16) zu einer Rinne die folgenden Schritte ausgeführt werden: Entfernen des extrudierten Materials, das zum Schluß den Bereich der Öffnung (62) abdeckt, Biegen des Metallträgers im Wesentlichen um die Normale zur longitudinalen Achse, so daß das extrudierte Plastik- oder Gummimaterial (20) an der Peripherie der Öffnung (62) miteinander in Kontakt gebracht wird und dabei eine scharfe Ecke in der Rinne bildet, und Verbinden des extrudierten Materials (20) im Berührungsbereich.

8. Verfahren nach Anspruch 6, gekennzeichnet durch die Ausbildung einer Kerbe (62, Fig. 8) mit im wesentlichen V-förmigem Querschnitt an der Stelle in der Rinne, wo eine scharfe Ecke erforderlich ist, mit der Öffnung des "V'' in der Basis der Rinne und dem Punkt des "V'' nahe am aber mit Abstand zu den longitudinalen Kanten der beiden Seitenwände der Rinne, so daß die beiden longitudinalen Teile des Bandes, zwischen denen sich die Kerbe (62) befindet, verbunden bleiben mittels zusammenhängender Randbereiche der beiden Seitenwände und daß die Linie, die entlang des schmalsten Bereichs der Kerbe verläuft, transversal zur Längsrichtung des Bandes ist, Biegung des Bandes um diese Linie, um die gegenüberliegenden Kanten der Kerbe (62) zusammenzubringen, und Befestigung der gegenüberliegenden Kanten der Kerbe (62) aneinander.

9. Verfahren nach Anspruch 8, dadurch gekennzeichnet, daß beim Aneinanderbefestigen der angenäherten Kanten der Kerbe (62, Fig. 8) die Plastik- oder Gummimaterialien (20) an den aneinander anliegenden Kanten miteinander verschweißt oder verklebt werden.

10. Verfahren nach Anspruch 4, dadurch gekennzeichnet, daß der Metallstreifen (32) zu einer Rinne gebogen und nach Bildung der rechtwinkligen Öffnungen (38, 72) mit extrudiertem Material beschichtet wird.

11. Verfahren nach Anspruch 10, dadurch gekennzeichnet, daß das Band mittels einer Schneidvorrichtung beim Passieren der Öffnung (38, 72) geschnitten wird.

12. Verfahren nach Anspruch 11, gekennzeichnet durch das automatische Erkennen der Positionen der Öffnungen (38, 72) und entsprechende Steuerung des Schneidvorgangs.

13. Verfahren nach einem der vorhergehenden Ansprüche, dadurch gekennzeichnet, daß keines der Metallschneidverfahren zwischen mindestens zwei der genannten in Längsrichtung angeordneten Bereiche des Metallstreifens (32) ausgeführt wird.

14. Verfahren nach einem der vorhergehenden Ansprüche, dadurch gekennzeichnet, daß eines der Metallschneidverfahren die Dicke des Metallstreifens (32) an mindestens einer der vorgegebenen in Längsrichtung angeordneten Bereiche verringert.

15. Verfahren nach Anspruch 14, dadurch gekennzeichnet, daß diese Dickenverringerung die Dicke des Metallstreifens (32) nur an einer der longitudinalen Kanten verringert.

16. Verfahren nach Anspruch 14, dadurch gekennzeichnet, daß diese Dickenverringerung die Dicke des Metallstreifens (32) an beiden longitudinalen Kanten verringert.

17. Vorrichtung zur Erzeugung eines rinnenförmigen Armierungs-Metall-Trägers (16) für Dichtungs-, Trimm- oder Glasführungsbänder oder dergleichen, bestehend aus einen Arbeitsweg definierenden Mitteln (Fig. 7) und Mittel zum Schneiden (80, 82, 84, 86), die auf dem Arbeitsweg zur Durchführung der Schneidvorgänge an einem Metallstreifen (32) angeordnet sind, wobei der Metallstreifen in den Arbeitsweg gebracht wird und sich der Metallstreifen (32) und die Mittel zum Schneiden relativ zueinander in Richtung des Arbeitswegs bewegen, dadurch gekennzeichnet, daß die Mittel zum Schneiden eine Vielzahl von Schneidvorrichtungen (80, 82, 84, 86) enthalten, die entlang des Arbeitswegs zur Durchführung unterschiedlicher Schneidvorgänge am Metallstreifen (32) angeordnet sind, die Vorrichtung ist weiterhin gekennzeichnet durch Steuerungsmittel (100, 102), die zu jeder Zeit auf die Relativbewegung und die Position des Metallstreifen (32) relativ zu jeder der Schneidvorrichtungen (80, 82, 84, 86) reagieren und die Schneidvorrichtungen (80, 82, 84, 86) in Betrieb setzen, so daß diese die entsprechenden Schneidvorgänge an den vorgegebenen Positionen des Metallstreifens (32) ausführen, und durch entlang des Arbeitswegs angeordnete Mittel zur Aufnahme des Metallstreifens nach Ausführung der Schneidvorgänge und Formung des Metallstreifens zu einer Rinne.

18. Vorrichtung nach Anspruch 17, gekennzeichnet durch entlang des Arbeitswegs angeordnete Plastik- oder Gummiextrusionsmittel zum Beschichten des Metallstreifens (32) mit extrudiertem Plastik- oder Gummimaterial (20) nach der Durchführung der Schneidvorgänge.

19. Vorrichtung nach Anspruch 18, dadurch gekennzeichnet, daß die Schneidvorrichtungen (80, 82, 84, 86) Mittel zum Schneiden vom im Wesentlichen rechteckigen Öffnungen (38, 72) in den Metallstreifen an mindestens einer von zwei die entsprechenden Enden einer vorgebenden Länge definierenden Positionen, die oder jede der Öffnungen (38, 72) erstreckt sich über die Breite des Metallstreifens und endet kurz vor dessen Kanten, so daß schmale metallische Randbereiche (40, 41; 74, 76) des Metallstreifens (32) verbleiben, und eine weitere Schneidvorrichtung zur Aufnahme des Metallträgers (16) nachdem dieser mit dem extrudiertem Plastik- oder Gummimaterial (20) beschichtet worden ist und zum Durchschneiden des extrudierten Materials (20) an der oder an jeder der Öffnungen (38 72) und der schmalen Randbereiche (40, 41; 74, 76).

20. Vorrichtung nach Anspruch 18 oder 19, dadurch gekennzeichnet, daß eine der Schneidvorrichtungen (80, 82, 84, 86) Mittel zum Schneiden einer im Wesentlichen rhombusförmigen Öffnung (62) an einer vorgegebenen Position längs des Metallstreifens (32) enthält, die rhombusförmige Öffnung (62) bezüglich der longitudinalen und transversalen Achse des Metallstreifens (32) symmetrisch angeordnet ist, die Öffnung (62) so angeordnet ist, daß ungeschnittene schmale metallische Randbereiche im Metallstreifen (32) an entgegengesetzten Seiten der Öffnung (62) verbleiben, wobei nach Formung des Metallstreifens zu einer Rinne die Öffnungen (62) eine im Querschnitt V-förmige, mit der Öffnung des "V" in der Basis und mit dem Punkt des "V" nahe am aber mit Abstand zu den Längskanten der Seitenwände an den schmalen Randbereichen (63; 64) der Rinne, Kerbe (62, Fig. 8) in der Rinne bildet, weiterhin gekennzeichnet durch Mittel zur Aufnahme des Metallträgers (16), nachdem dieser mit dem extrudiertem Plastik- oder Gummimaterial (20) beschichtet worden ist und zum Entfernen des die rhombusförmige Öffnung (62) bedeckenden extrudierten Materials (20) und zum Biegen des beschichteten Metallträgers (16) an der rhombusförmigen Öffnung (62) um die im schmalsten Bereich der Kerbe liegende transversale Achse, um die gegenüberliegenden Kanten der rhombusförmigen Öffnung (62) zusammenzubringen und die metallischen Randbereiche (63, 64) zu biegen und durch Mittel zum aneinander befestigen des extrudiertem Materials (20) an den gegenüberliegenden Kanten der rhombusförmigen Öffnung (62), wodurch in dem beschichteten Metallträger (16) eine Ecke ausgebildet wird.

21. Vorrichtung nach Anspruch 18, dadurch gekennzeichnet, daß eine der Schneidvorrichtungen eine Schneidvorrichtung enthält, welche eine Kerbe (62, Fig. 8) in der Rinne des Bandes ausbildet, die im wesentlichen "V"-förmig im Querschnitt mit der Öffnung des "V" in der Basis und mit dem Punkt "V" nahe am aber mit Abstand zu den Längskanten der Seitenwände der Rinne ist, so daß die beiden longitudinalen Bereiche des Bandes an beiden Seiten der Kerbe (62) durch schmale Randbereiche (63, 64) der beiden Seitenwände verbunden bleiben, weiterhin gekennzeichnet durch Mittel zum Biegen des Bandes um die im schmalsten Bereich der Kerbe liegende transversale Achse, um das extrudierte Material (20) an den Kanten der Kerbe zusammenzubringen, und durch Mittel zum Aneinanderbefestigen des extrudierten Materials (20) an den Kanten der Kerbe.

22. Vorrichtung nach einem der Ansprüche 17 bis 21, dadurch gekennzeichnet, daß die Steuerungsmittel (100, 102) Mittel zum Betätigen der Schneidvorrichtungen enthalten, so daß kein Schneidvorgang zwischen den Bereichen des Metallstreifens (32), in denen die besagten Schneidvorgänge ausgeführt werden, realisiert wird.

23. Vorrichtung nach einem der Ansprüche 17 bis 22, dadurch gekennzeichnet, daß jede Schneidvorrichtung (80, 82, 84, 86) eine rotierende Schneidemaschine enthält.

24. Vorrichtung nach Anspruch 23, dadurch gekennzeichnet, daß die Steuerungsmittel (100, 102) Mittel zum Bewegen jeder rotierenden Schneidemaschine hin zu und weg vom Arbeitsweg enthalten, um insbesondere zu bewirken, daß die rotierende Schneidemaschine den Schneidvorgang ausführt oder den Schneidvorgang beendet.

25. Vorrichtung nach einem der Ansprüche 17 bis 24, dadurch gekennzeichnet, daß die Schneidvorrichtungen (80, 82, 84, 86) Mittel zur Verringerung der Dicke des Metallstreifens (32) an mindestens einer vorgegebenen Position einschließen.

26. Rinnenförmiger, sich zwischen zwei vorgegebenen Endpunkten (38, 72) erstreckender und eine Vielzahl von über seine Länge verteilten Schlitzen aufweisender Metallträger, dessen Schlitze in entsprechenden Gruppen angeordnet sind, wobei sich die Schlitze in mindestens einigen von diesen Gruppen in Form oder Anordnung von denen in den anderen Gruppen unterscheiden, wobei jede Gruppe sich über einen entsprechenden logitudinalen Bereich des Metallträgers innerhalb der Endpunkte (38, 72) erstreckt, dadurch gekennzeichnet, daß die Schlitze in mindestens zwei Gruppen sich über unterschiedliche Längen der Rinne erstrecken.

27. Metallträger nach Anspruch 26, dadurch gekennzeichnet, daß die Schlitze in einer (z. B. 70) der besagten zwei Gruppen sich bis in eine Seitenwand und nur über einen Teil der Basis der Rinne erstrecken.

28. Metallträger nach Anspruch 26, dadurch gekennzeichnet, daß die Schlitze in mindestens einer der besagten zwei Gruppen sich kontinuierlich von einem Punkt in einer der Seitenwänden über die Basis bis zur anderen Seitenwand der Rinne erstrecken.

29. Metallträger nach einem der Ansprüche 26 bis 28, dadurch gekennzeichnet, daß nur über einen Bereich (66, 70) der Gesamtlänge eine Seitenwand eine geringere Tiefe als die Tiefe des benachbarten Bereichs der selben Seitenwand der Rinne aufweist.

30. Metallträger nach Anspruch 29, dadurch gekennzeichnet, daß die Seitenwand einen entsprechenden Bereich mit geringerer Tiefe auf jeder Seite der Rinne aufweist.

31. Metallträger nach einem der Ansprüche 26, dadurch gekennzeichnet, daß der Metallträger an jedem Endpunkt mit entsprechenden Öffnungen (38, 72) versehen ist, die von den beiden longitudinalen Bereichen des Metallträgers auf jeder Seite der nur durch Randstege der beiden Seitenwände der Rinne miteinander verbundenen Endpunkte wegführen.

32. Metallträger nach einem der Ansprüche 26 bis 31, gekennzeichnet durch eine Kerbe (62) an einer vorgegebenen Stelle innerhalb der beiden Endpunkte in der Rinne, die im wesentlichen "V"-förmig im Querschnitt (Fig. 8) mit der Öffnung des "V" in der Basis und mit dem Punkt des "V" nahe am aber mit Abstand zu den Kanten der Seitenwände, so daß die beiden longitudinalen Bereiche des Metallträgers auf jeder Seite der Kerbe (62) durch Randbereiche (62, 64) der beiden Seitenwände verbunden bleiben.

## Revendications

1. Procédé de fabrication d'une armature métallique (16) destinée à être utilisée dans un profilé d'étanchéité, d'enjoliveur ou de guidage de vitrage ou analogue, dans lequel plusieurs opérations de découpe de métal sont exécutées le long d'un tronçon continu prédéterminé d'une ébauche métallique (32), caractérisé en ce que les opérations de découpe de métal exécutées sur des parties espacées longitudinalement et prédéterminées de l'ébauche métallique (32) diffèrent les unes des autres de manière prédéterminée afin qu'elles donnent des caractéristiques variant de manière correspondante dans l'armature (16), chaque partie prédéterminée de l'ébauche restant raccordée à la partie ou aux parties suivantes dont elle est solidaire.

2. Procédé selon la revendication 1, caractérisé en ce qu'une opération de découpe de métal comprend la découpe d'une configuration prédéterminée de fente large dans l'ébauche (32).

3. Procédé selon la revendication 1, caractérisé en ce qu'une opération de découpe de métal comprend l'étape de découpe d'une configuration prédéterminée de fente mince dans l'ébauche (32), puis l'étape d'amincissement du métal de l'ébauche (32) afin qu'il soit étiré et d'élargissement des fentes minces en fentes larges.

4. Procédé selon l'une quelconque des revendications précédentes, caractérisé en ce que l'une des étapes de découpe de métal comprend l'étape de découpe d'une ouverture pratiquement rectangulaire (38, 72) dans l'ébauche métallique (32) à chacune de deux positions délimitant les extrémités de l'armature métallique (16), chaque ouverture (38, 72) laissant deux parties marginales solidaires (40, 41, 74, 76) qui ne sont pas découpées et qui sont disposées le long de chaque bord de l'ébauche (32).

5. Procédé selon l'une quelconque des revendications précédentes, caractérisé par l'étape d'enrobage de la matière métallique (16) dans une matière plastique ou de caoutchouc extrudé (20).

6. Procédé selon la revendication 5, caractérisé par l'étape de formation de l'armature métallique (16) avec une forme de canal avant ou après l'étape d'extrusion.

7. Procédé selon la revendication 6, caractérisé en ce que l'une des opérations de découpe de métal comprend une étape de découpe d'une ouverture pratiquement en forme de losange (62) à travers l'ébauche métallique (32), deux des sommets se trouvant pratiquement sur l'axe longitudinal de l'ébauche (32) et les deux autres sommets se trouvant sur un axe perpendiculaire à l'axe longitudinal mais étant placés à l'intérieur des bords de l'ébauche afin qu'il reste de minces régions marginales de bord non coupées (63, 64), et par la mise en oeuvre des étapes suivantes, après l'étape d'extrusion et l'étape de mise de l'armature (16) en forme de canal : l'enlèvement de la matière extrudée recouvrant une partie au moins de ladite ouverture (62), le pliage de l'armature pratiquement autour de l'axe perpendiculaire afin que la matière plastique ou le caoutchouc (20) qui est extrudé autour de la périphérie de l'ouverture (62) soit au contact d'elle-même et forme ainsi un coin net dans le canal, et la fixation de la matière extrudée (20) à elle-même à l'endroit de son contact.

8. Procédé selon la revendication 6, caractérisé par une étape de formation d'une encoche (62, figure 8) ayant en coupe une forme générale en V, traversant le canal à un emplacement auquel un coin net est nécessaire, l'embouchure ouverte du V se trouvant à la base du canal et la pointe du V étant proche des bords longitudinaux des deux parois latérales du canal mais à distance de ces bords, si bien que les deux parties longitudinales du profilé entre lesquelles est disposée l'encoche (62) restent raccordées mutuellement par les parties marginales de bord des deux parois latérales et que la droite passant le long de la partie la plus étroite de l'encoche est transversale à la longueur du profilé, par la courbure du profilé autour de ladite droite afin que les bords opposés de l'encoche (62) soient rapprochés et fermés, et par la fixation des bords opposés de l'encoche (62) l'un à l'autre.

9. Procédé selon la revendication 8, caractérisé en ce que l'étape de fixation des bords formés de l'encoche (62, figure 8) l'un à l'autre comprend le soudage ou le collage de la matière plastique ou de caoutchouc (20) aux bords rapprochés.

10. Procédé selon la revendication 4, caractérisé par les étapes de courbure de l'ébauche (32) en forme de canal et de recouvrement par la matière extrudée après la formation des ouvertures rectangulaires (38, 72).

11. Procédé selon la revendication 10, caractérisé par l'étape de découpe du profité à l'aide d'un organe de coupe passant dans l'une des ouvertures (38, 72).

12. Procédé selon la revendication 11, caractérisé par l'étape de détection automatique de la position de chaque ouverture (38, 72) et de commande de l'étape de découpe en conséquence.

13. Procédé selon l'une quelconque des revendications précédentes, caractérisé en ce qu'aucune opération de découpe de métal n'est réalisée entre deux au moins des parties longitudinalement distantes de l'ébauche (32).

14. Procédé selon l'une quelconque des revendications précédentes, caractérisé en ce que l'une des opérations de découpe de métal comprend une étape de réduction de la largeur de l'ébauche (32) à l'une au moins des parties longitudinalement espacées prédéterminées.

15. Procédé selon la revendication 14, caractérisé en ce que cette étape de réduction de largeur réduit la largeur de l'ébauche (32) depuis un bord longitudinal seulement.

16. Procédé selon la revendication 14, caractérisé en ce que l'étape de réduction de largeur réduit la largeur de l'ébauche (32) depuis les deux bords longitudinaux.

17. Appareil de fabrication d'une armature métallique (16) en forme de canal destinée à un profilé d'étanchéité, d'enjoliveur ou de guidage de vitrage ou analogue, comprenant un dispositif délimitant un trajet (figure 7) d'usinage, et un dispositif à organe de coupe (80, 82, 84, 86) adjacent au trajet d'usinage et destiné à exécuter des opérations de coupe sur une ébauche métallique longitudinale (32) lorsque celle-ci se trouve sur le trajet d'usinage, et l'ébauche métallique (32) et le dispositif à organe de coupe se déplacent mutuellement dans la direction du trajet d'usinage, caractérisé en ce que le dispositif à organe de coupe comprend plusieurs ensembles à organe de coupe (80, 82, 84, 86) positionnés le long du trajet d'usinage et destinés chacun à exécuter une opération différente de coupe sur l'ébauche (32), l'appareil étant en outre caractérisé par un dispositif de commande (100, 102) commandé par le déplacement relatif et par la position de l'ébauche (32) par rapport à chacun des ensembles à organe de coupe (80, 82, 84, 86) à un moment quelconque de manière qu'il commande les ensembles à organe de coupe (80, 82, 84, 86) afin qu'il exécutent les opérations respectives de coupe sur l'ébauche (32) à des positions respectives prédéterminées le long de celle-ci, et par un dispositif placé le long du trajet d'usinage et destiné à recevoir l'ébauche après l'exécution des opérations de coupe et de mise à la configuration d'un canal.

18. Appareil selon la revendication 17, caractérisé par un dispositif d'extrusion de matière plastique ou de caoutchouc, placé le long du trajet d'usinage et destiné à recouvrir l'ébauche (32) de matière plastique ou de caoutchouc (20) qui est extrudée après l'exécution des opérations de coupe sur l'ébauche.

19. Appareil selon la revendication 18, caractérisé en ce que l'un des ensembles à organe de coupe (80, 82, 84, 86) comporte un dispositif de coupe d'une ouverture pratiquement rectangulaire (38, 72) dans l'ébauche à l'une au moins de deux positions sur sa longueur qui délimitent les extrémités respectives d'un tronçon prédéterminé, l'ouverture ou chaque ouverture (38, 72) étant disposée transversalement suivant la largeur de l'ébauche et aboutissant à une faible distance des bords de celle-ci de manière qu'il reste d'étroites parties métalliques marginales (40, 41 ; 74, 76) de l'ébauche (32) qui ne sont pas coupées, et un ensemble supplémentaire à organe de coupe est placé afin qu'il reçoive l'armature (16) après qu'elle a été recouverte de la matière plastique ou le caoutchouc (20) qui est extrudé et destiné à couper à travers la matière extrudée (20) au niveau de l'ouverture ou de chaque ouverture (38, 72) et à travers les étroites parties marginales (40, 41 ; 74, 76).

20. Appareil selon la revendication 18 ou 19, caractérisé en ce que l'un des ensembles à organe de coupe (80, 82, 84, 86) comporte un dispositif de coupe d'une ouverture pratiquement en forme de losange (62) à une position prédéterminée de la longueur de l'ébauche métallique (32), l'ouverture en forme de losange (62) étant disposée symétriquement par rapport aux axes longitudinal et transversal de l'ébauche (32), l'ouverture (62) ayant une position telle qu'il reste d'étroites parties métalliques marginales de bord (63, 64) qui ne sont pas coupées dans l'ébauche (32) sur les côtés opposés de l'ouverture (62), si bien que, après que l'ébauche (32) a été mise en forme de canal, cette ouverture (62) forme une encoche (62, figure 8) traversant le canal et ayant, en coupe, une forme générale en V, l'embouchure du V se trouvant à la base du canal et la pointe près des bords longitudinaux des parois latérales de l'ébauche mais à distance de ces bords dont elle est séparée par les étroites parties marginales de bord (63, 64), l'appareil étant en outre caractérisé par un dispositif qui reçoit l'armature (16) après qu'elle a été recouverte de la matière plastique ou de caoutchouc (20) qui a été extrudé et destiné à retirer une partie au moins de la matière extrudée (20) qui recouvre l'ouverture en forme de losange (62) et à courber l'armature recouverte (16) au niveau de l'ouverture en forme de losange (62) autour de l'axe transversal dans la partie la plus étroite de l'encoche afin que les bords opposés de l'ouverture en forme de losange soient rapprochés et que les parties métalliques marginales de bord (63, 64) soient pliées, et par un dispositif de fixation de la matière extrudée (20) à elle-même aux bords opposés de l'ouverture en forme de losange (62) de manière qu'un coin soit formé dans l'armature recouverte (16).

21. Appareil selon la revendication 18, caractérisé en ce que l'un des ensembles à organe de coupe comprend un ensemble à organe de coupe destiné à former une encoche (62, figure 8) traversant le canal du profilé et qui a de façon générale une forme en V en coupe, l'embouchure ouverte du V se trouvant à la base du canal et sa pointe étant proche des bords longitudinaux des parois latérales mais à distance de ces bords, si bien que les deux parties longitudinales du profilé, de part et d'autre de l'encoche (62), restent raccordées par d'étroites parties marginales (63, 64) de bord des deux parois latérales, l'appareil étant en outre caractérisé par un dispositif de courbure du profilé autour de l'axe transversal dans la partie la plus étroite de l'encoche afin que la matière extrudée (20) soit mise en contact des bords de l'encoche, et par un dispositif de fixation de la matière extrudée (20) à elle-même aux bords de l'encoche.

22. Appareil selon l'une quelconque des revendications 17 à 21, caractérisé en ce que le dispositif de commande (100, 102) comporte un dispositif de commande des ensembles à organe de coupe (80, 82, 84, 86) de manière qu'aucune opération de coupe ne soit réalisée sur une partie de l'ébauche (32) comprise entre des parties placées sur sa longueur et sur lesquelles les opérations respectives de coupe sont exécutées.

23. Appareil selon l'une quelconque des revendications 17 à 22, caractérisé en ce que chaque ensemble à organe de coupe (80, 82, 84, 86) comporte un organe rotatif de coupe.

24. Appareil selon la revendication 23, caractérisé en ce que le dispositif de commande (100, 102) comporte un dispositif de déplacement de chaque organe rotatif de coupe en translation par rapport au trajet d'usinage de manière que l'organe de coupe exécute une opération respective de coupe et que l'organe de coupe cesse d'exécuter cette opération respective.

25. Appareil selon l'une quelconque des revendications 17 à 24, caractérisé en ce que les ensembles à organe de coupe (80, 82, 84, 86) comportent un dispositif destiné à réduire la largeur de l'ébauche (32) à l'une au moins des positions prédéterminées sur sa longueur.

26. Armature métallique en forme de canal, disposée en une seule pièce entre deux points terminaux prédéterminés (38, 72) et ayant plusieurs fentes larges réparties sur sa longueur, les fentes larges étant disposées en groupes respectifs, certaines au moins des fentes larges ayant des formes différentes ou une disposition différente de celles d'autres groupes, chaque groupe étant disposé dans une région longitudinale respective de l'armature entre les points terminaux (38, 72), caractérisée en ce que les fentes larges d'au moins deux groupes sont disposées respectivement sur des proportions différentes de la largeur du canal.

27. Armature selon la revendication 26, caractérisée en ce que les fentes de l'un (par exemple 70) de deux groupes sont disposées chacune dans une paroi latérale du canal et sur une partie seulement de la base du canal.

28. Armature selon la revendication 26, caractérisée en ce que les fentes larges de l'un au moins (52) des deux groupes sont disposées chacune de façon continue d'un emplacement de l'une des parois latérales du canal jusqu'à l'autre paroi latérale du canal en passant par la base du canal.

29. Armature selon l'une quelconque des revendications 26 à 28, caractérisée en ce qu'elle comporte, sur une partie (66, 70) de sa longueur seulement, une paroi latérale de canal de plus faible profondeur que celle de la partie adjacente de la même paroi latérale.

30. Armature selon la revendication 29, caractérisée en ce qu'une partie respective de la paroi latérale du canal a une plus faible profondeur de chaque côté du canal.

31. Armature selon l'une quelconque des revendications 26 à 30, caractérisée en ce qu'elle a des ouvertures à chacun des points terminaux, formées par des ouvertures respectives (38, 72) qui laissent les deux parties longitudinales de l'armature placées de part et d'autre de chaque point terminal sous forme raccordée par des parties marginales de bord (40, 41 ; 74, 76) des deux parois latérales du canal.

32. Armature selon l'une quelconque des revendications 26 à 31, caractérisée par une encoche (62) traversant le canal en position prédéterminée entre les deux points terminaux, l'encoche (62) ayant une forme générale en V en coupe (figure 8), l'embouchure ouverte du V étant à la base du canal et sa pointe étant proche des bords des parois latérales mais à distance de ceux-ci, si bien que les deux parties longitudinales de l'armature placées de part et d'autre de l'encoche (62) restent raccordées par des parties marginales (62, 64) de bord des deux parois latérales.
